# EUROPÄISCHE PATENTANMELDUNG

(11) **EP 1 870 497 A1**
(43) Veröffentlichungstag der Anmeldung: **26.12.2007**
(21) Anmeldenummer: 06013037.4
(22) Anmeldetag: 23.06.2006
(51) Int. Cl.: C25F 5/00

(54) **Verfahren zum elektrochemischen Entfernen einer metallischen Beschichtung von einem Bauteil**

(71) Anmelder: SIEMENS AKTIENGESELLSCHAFT, 80333 München (DE)
(72) Erfinder: Jensen, Jens Dahl, Dr., 14050 Berlin (DK); Krüger, Ursus, Dr., 14089 Berlin (DE); Körtvelyessy, Daniel, 13469 Berlin (DE); Reiche, Ralph, 13465 Berlin (DE); Winkler, Gabriele, 13587 Berlin (DE)

(57) **Zusammenfassung**

Die Erfindung betrifft ein Verfahren zum elektrochemischen Entfernen einer metallischen Beschichtung von einem Bauteil (4), bei dem das Bauteil (4) in eine Elektrolytlösung (2) getaucht wird und durch das Bauteil (4) und eine mit dem Elektrolyt (2) in Kontakt befindliche Hilfselektrode (3) ein Strom geleitet wird. Der Strom ist mit einer Routine gepulst, die einen Dutycycle von > 10 bis < 90%, zwei Stromdichten zwischen 5 bis 1000 mA/cm² und eine Frequenz von 5 bis 1000 Hz aufweist.

## Beschreibung

Die Erfindung betrifft ein Verfahren zum elektrochemischen Entfernen einer metallischen Beschichtung von einem Bauteil, bei dem das Bauteil in eine Elektrolytlösung getaucht wird und durch das Bauteil und eine mit dem Elektrolyt in Kontakt befindliche Hilfselektrode ein Strom geleitet wird.

Viele Bauteile, die hohen Temperaturen und korrosiven Bedingungen ausgesetzt werden, sind heute teils mit mehrlagigen Schutzbeschichtungen versehen. Dies trifft u.a. auf Bauteile von Gasturbinen wie Turbinenschaufeln zu, die in korrosiven Umgebungen bei Temperaturen über 1000°C eingesetzt werden. Aufgrund der extremen Belastung nutzen sich die Beschichtungen jedoch ab und müssen in regelmäßigen Abständen erneuert werden (Refurbishment). Dazu ist es nötig, zunächst die alten, beschädigten Schutzschichten vollständig von dem Bauteil zu entfernen, ohne dass dabei das Bauteil selbst beschädigt wird. Dieser Vorgang ist ein Teil des Refurbishment-Prozesses für Turbinenschaufeln.

Schutzbeschichtungssysteme für Turbinenschaufeln sind häufig zumindest zweilagig ausgebildet, wobei als erste Lage unmittelbar auf dem Bauteil eine Haftschicht aufgebracht ist, die in vielen Fällen eine Zusammensetzung des Typs MCrA1X hat. Auf der Oberfläche der Haftschicht befindet sich als zweite Lage eine Wärmedämmschicht, beispielsweise auf Keramikbasis. Um im Rahmen des Refurbishments eine Neubeschichtung einer entsprechenden Turbinenschaufel vornehmen zu können, wird zunächst in einem ersten Schritt die obere keramische Wärmedämmschicht mechanisch, etwa mit Hilfe von Sandstrahlen entfernt. In einem weiteren Schritt wird dann die metallische Haftschicht von der Oberfläche des Bauteils abgetragen. Dies kann durch den Einsatz elektrochemischer Verfahren geschehen, wobei die Turbinenschaufel in eine Elektrolytlösung getaucht wird und an die Schaufel und eine ebenfalls in dem Elektrolyt angeordnete Hilfselektrode eine geeignete Spannung angelegt wird.

In der DE 102 59 365 A1 sind beispielsweise eine Vorrichtung und ein Verfahren zum Entfernen von metallischen Beschichtungen von der Oberfläche eines Bauteils mit Hilfe eines elektrochemischen Prozesses unter Einsatz von gepulstem Strom beschrieben.

Allerdings treten bei den im Stand der Technik bekannten Verfahren verschiedene Probleme auf. So kann es einerseits bei der Verwendung von zu starken Strömen leicht zu einer Beschädigung des Grundmaterials der Turbinenschaufel kommen und andererseits ist es ebenfalls möglich, dass im Laufe der Betriebszeit der Turbinenschaufel entstandene Verunreinigungen, beispielsweise in der Form komplexer kristalliner Verbindungen, nicht vollständig entfernt werden, was eine Neubeschichtung erschwert oder gar unmöglich macht.

Es ist deshalb eine Aufgabe der vorliegenden Erfindung, ein Verfahren zur elektrochemischen Entfernung einer metallischen Beschichtung bereit zu stellen, bei dem einerseits ein zügiger und vollständiger Schichtabtrag, unter Einschluss von kristallinen Verunreinigungen stattfindet, es aber andererseits nicht zu einer Beschädigung des Grundmaterials des Bauteils kommt.

Diese Aufgabe wird dadurch gelöst, dass der Strom mit einer Routine gepulst ist, die einen Dutycycle von > 0% bis < 100%, insbesondere von 20% bis 80%, zwei Stromdichten zwischen 5mA/cm² bis 1000mA/cm², insbesondere 10mA/cm² bis 300mA/cm² und eine Frequenz von 5HZ bis 1000Hz, insbesondere 25bis 300Hz, aufweist.
Der gepulste Strom weist also alternierend eine obere Stromdichte und eine untere Stromdichte auf und fällt demzufolge nicht auf null zurück. Die Zeit, in der der Strom die obere Stromdichte innerhalb einer Pulsfolge aufweist, wird mit t als Plusdauer, und die Zeit, in der der Strom innerhalb einer Pulsfolge beide Stromdichten durchläuft, mit T als Periodendauer bezeichnet. Der Dutycycle ist wiederum das Verhältnis aus Pulsdauer und Periodendauer t/T.

Es hat sich gezeigt, dass durch die Verwendung eines gepulsten Stroms, der durch die oben genannten Parameter definiert ist, einerseits ein zügiger und vollständiger Schichtabtrag der metallischen Beschichtung erzielt und andererseits eine Beschädigung des Bauteils vermieden wird.

Gemäß einer Ausführungsform der Erfindung kann der Dutycycle 25% bis 75%, insbesondere 50% bis 75% betragen. Die Stromdichten können im Bereich zwischen 50mA/cm² bis 250mA/cm², insbesondere zwischen 100mA/cm² bis 200mA/cm² und hier insbesondere zwischen 150mA/cm² bis 200mA/cm² liegen. Es hat sich außerdem gezeigt, dass die Frequenz im Bereich zwischen 50Hz bis 275Hz, insbesondere zwischen 150Hz bis 275Hz liegen sollte.

Insbesondere bei der Entfernung von metallischen Beschichtungen von Turbinenschaufeln haben sich folgende Stromroutinen als vorteilhaft erwiesen: Dutycycle 50%, Stromdichten 100mA/cm² und 150mA/cm² und Frequenz 150Hz; Dutycycle 75%, Stromdichten 100mA/cm² und 150mA/cm² und Frequenz 250Hz; Dutycycle 75%, Stromdichten 150mA/cm² und 200mA/cm² und Frequenz 50Hz und Dutycycle 50%, Stromdichten 150mA/cm² und 200mA/cm² und Frequenz 250Hz.

Gemäß einer weiteren Ausführungsform kann die Elektrolytlösung eine anorganische oder organische Säure oder eine anorganische oder organische Base oder eine Mischung aus anorganischen und organischen Säuren und Basen enthalten bzw. daraus bestehen.
Als Säure ist beispielsweise HCl geeignet, besonders weniger als 10 Gew.-% und insbesondere weniger wobei hier eine Konzentration von weniger als 20 Gew.-%, als 6 Gew.-% HCl in der Elektrolytlösung vorteilhaft sind.

Es hat sich außerdem gezeigt, dass ein effektiver Schutz vor einem unbeabsichtigten Angriff auf das Grundmaterial des Bauteils erzielt werden kann, wenn die Elektrolytlösung eine Alkanolamin-Verbindung oder eine diese Verbindung enthaltenes Salz als Inhibitor enthält. Als besonders geeigneter Inhibitor hat sich dabei Triethanolamin oder eines seiner Salze erwiesen. Der Schutz kann außerdem erhöht werden, wenn zusätzlich weitere Inhibitoren wie Carbonsäuren und/oder Aldehydverbindungen und/oder ungesättigte Alkohole in der Elektrolytlösung enthalten sind.

In dem Verfahren kann zumindest ein mechanischer Reinigungsschritt durch Sandstrahlen vorgesehen sein, der beispielsweise unmittelbar nach dem elektrochemischen Entfernen durchgeführt werden kann, um eventuell noch anhaftende Reste der Beschichtung zu entfernen. Es hat sich als vorteilhaft erwiesen, wenn beim Sandstrahlen eine unlösliche MCrA1X-Masse pro Fläche des Bauteils im Bereich von 30mg/cm² bis 160mg/cm² abgetragen wird. In diesem Fall erfolgt ein zügiger Schichtabtrag, ohne dass es zu einer Beschädigung des Bauteils kommt.

Gemäß einer weiteren Ausführungsform kann in dem Reinigungsverfahren ein elektrochemischer Entschichtungsschritt mit Gleichstrom vorgesehen sein. Wenn dieser Schritt direkt nach dem zuvor beschriebenen Sandstrahlen durchgeführt wird, können auf diese Weise immer noch auf dem Bauteil vorhandene geringste Reste der metallischen Beschichtung entfernt werden. Vorteilhafterweise ist dabei eine unbeabsichtigte Beschädigung des Bauteils aufgrund der geringen Aggressivität des Verfahrensschritts ausgeschlossen. Nach diesem Verfahrensschritt kann erneut eine Sandstrahlung vorgenommen werden.

Versuche haben gezeigt, dass das erfindungsgemäße Verfahren insbesondere für Bauteile von Gasturbinen wie Turbinenschaufeln geeignet ist. Diese weisen häufig als metallische Beschichtung eine MCrA1X-Schicht auf, wobei M aus der Gruppe Fe, Co und/oder Ni und x aus der Gruppe Y, La oder Seltene Erden ausgewählt ist, auf. Es hat sich gezeigt, dass diese Schichten schnell und vollständig durch das erfindungsgemäße Verfahren entfernt werden können.

Die Erfindung wird im Folgenden anhand eines Ausführungsbeispiels unter Bezugnahme auf die beiliegenden Zeichnungen näher erläutert. Es zeigen:
- Figur 1: eine Einrichtung für die Durchführung des erfindungsgemäßen Verfahrens in schematischer Darstellung,
- Figur 2: ein Diagramm, das einen mit einer Routine gepulsten Strom veranschaulicht,
- Figur 3: eine Gasturbine,
- Figur 4: eine Turbinenschaufel,
- Figur 5: eine Brennkammer.

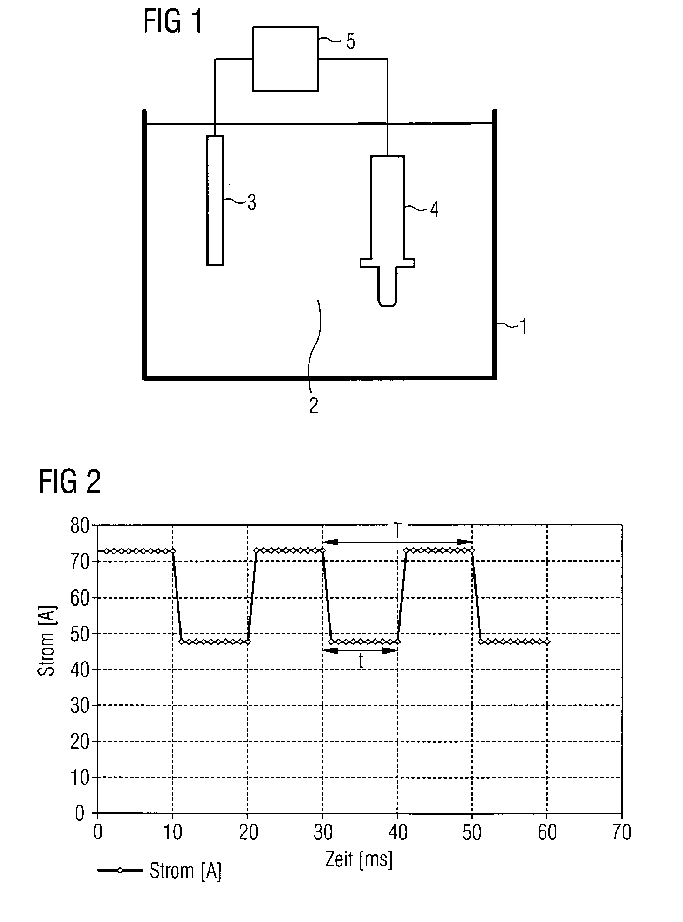

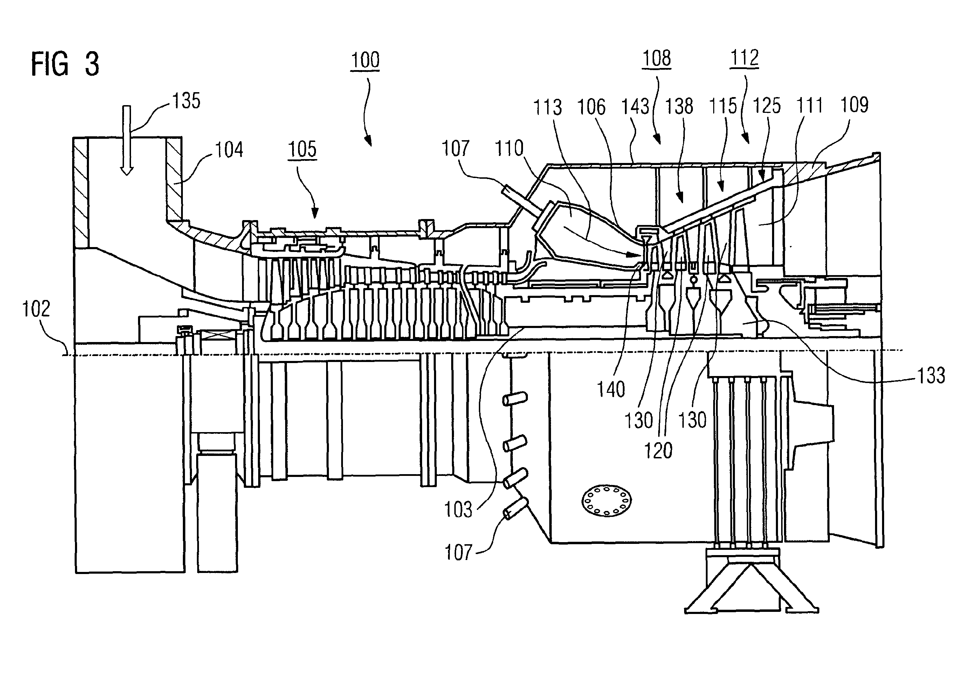

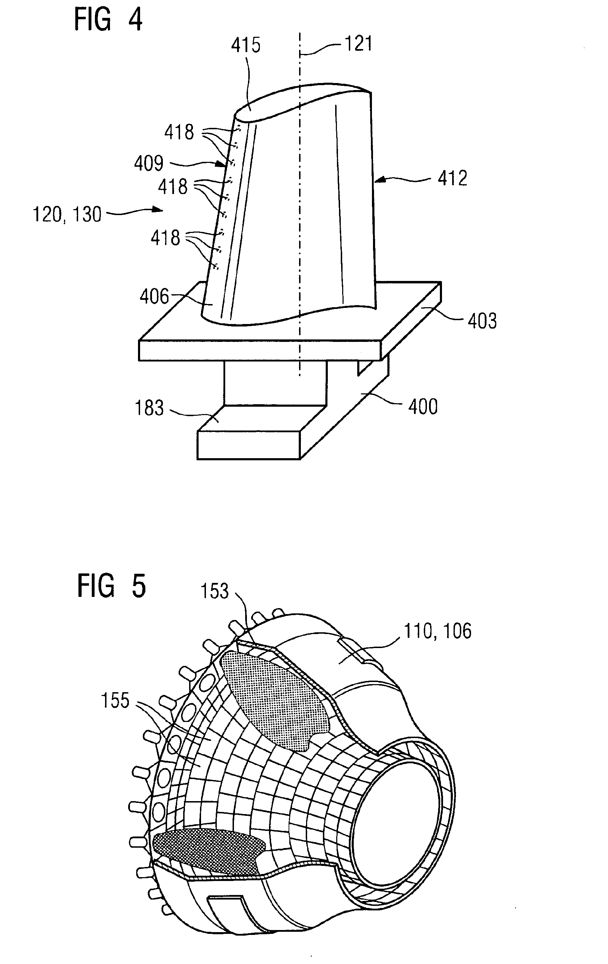

In der Figur 1 ist erst eine Vorrichtung für die Durchführung des erfindungsgemäßen Verfahrens gezeigt.
Die Vorrichtung besteht aus einem Elektrolytbehälter 1, der mit einem Elektrolyt 2 gefüllt ist, wobei es sich hier bevorzugt um eine wässrige 4 Gew.-%ige bis 6 Gew.-%ige HCl-Lösung handelt, die zusätzlich zum Beispiel Triethanolamin als Inhibitor enthält. In der Elektrolytlösung 2 sind eine Hilfselektrode 3 und ein Bauteil 4, 120, 130 (Fig. 3, 4), 155 (Fig. 5) vollständig untergetaucht. Bei dem Bauteil 4 handelt es sich in diesem Fall um eine beschichtete Turbinenschaufel, welche auf ihrer Oberfläche eine MCrAlX-Beschichtung aufweist. Die Hilfselektrode 3 und das Bauteil 4 sind elektrisch leitend mit einem Generator 5 verbunden.

Um die Turbinenschaufel 4, 120, 130 etwa im Rahmen der Wiederaufbereitung von Beschichtungen (Beschichtungsmasse) zu befreien, wird in einem ersten Schritt eine eventuell auf der MCrAlX-Schicht aufgebrachte Wärmedämmschicht mechanisch entfernt. Dies kann vorzugsweise durch Sand- oder Wasserstrahlen oder Trockeneisbestrahlen erfolgen.

Anschließend kann die Turbinenschaufel noch aktivitätsgestrahlt, d.h. eine mechanische Behandlung der Oberfläche, insbesondere durch Sandstrahlen, werden.

Die jetzt nur noch mit der MCrAlX-Schicht versehene Turbinenschaufel 4 wird in die Elektrolytlösung 2 getaucht und elektrisch leitend mit dem Generator 5 verbunden. Der Generator 5 leitet anschließend während der elektrochemischen Entfernung der metallischen Beschichtung von dem Bauteil 4 einen gepulsten Strom durch die Hilfselektrode 3 und das Bauteil 4. Der gepulste Strom ist dabei durch ein Dutycycle von > 10% bis < 90%, zwei Stromdichten zwischen 5mA/cm² bis 1000mA/cm² und eine Frequenz von 5Hz bis 1000Hz charakterisiert.

Figur 2 zeigt beispielhaft einen gepulsten Strom, der alternierend eine Stromdichte von 48mA/cm² und 73mA/cm² aufweist, wobei er nicht auf null zurückfällt.
In der Figur 2 ist mit T die Periodendauer bezeichnet, in der der Strom einmal die obere und einmal die untere Stromdichte durchläuft. Die Dauer der so erzeugten Pulse ist durch die Frequenz 1/T= f bestimmt. Das Verhältnis aus Pulsdauer und Periodendauer ergibt den Dutycycle.

Nachdem die MCrA1X-Schicht nahezu vollständig von der Turbinenschaufel 4 auf gepulstem elektrochemischem Wege abgelöst worden ist, wird der Strom abgeschaltet und die Turbinenschaufel aus dem Elektrolyt 2 entfernt.
Um eventuell noch auf der Turbinenschaufel 4 vorhandene Reste der Beschichtung zu entfernen, wird vorzugsweise zunächst ein mechanischer Reinigungsschritt durch Sandstrahlen durchgeführt. Dabei wird eine unlösliche MCrA1X-Masse pro Fläche der Turbinenschaufel 4 im Bereich von 30mg/cm² bis 160mg/cm² entfernt, wobei es sich als vorteilhaft erwiesen hat, wenn die Menge 30mg/cm² bis 70mg/cm², insbesondere 34mg/cm² bis 51mg/cm² beträgt.

Ebenso kann das gepulste elektrochemische Entschichtungsverfahren unterbrochen werden, um das Bauteil sandzustrahlen. Bevorzugt wird das gepulste elektrochemische Entschichtungsverfahren nicht unterbrochen.
Nach dem Entfernen aus dem Elektrolyt kann auch eine Säuberung, besonders in einer Flüssigkeit, insbesondere in Wasser erfolgen.

Tabellen 1 und 2 zeigen Merkmalskombinationen, die auf ihre Eignung untersucht wurden und jeweils gute Ergebnisse zeigen.

**Tabelle 1**

| Merkmalskombination | Parametermatrix | | | |
|---|---|---|---|---|
| | A | B | C | D |
| 1 | 1 | 1 | 1 | 1 |
| 2 | 1 | 2 | 2 | 2 |
| 3 | 1 | 3 | 3 | 3 |
| 4 | 2 | 1 | 2 | 3 |
| 5 | 2 | 2 | 3 | 1 |
| 6 | 2 | 3 | 1 | 2 |
| 7 | 3 | 1 | 3 | 2 |
| 8 | 3 | 2 | 1 | 3 |
| 9 | 3 | 3 | 2 | 1 |

**Tabelle 2**

| Faktoren | Einstellstufen | | |
|---|---|---|---|
| | 1 | 2 | 3 |
| A Stromdichte (mA/cm²) | 150 | 200 | 200 |
| | 100 | 100 | 150 |
| B Frequenz (Hz) | 50 | 150 | 250 |
| C Duty Cycle (%) | 25 | 50 | 75 |
| D Sandstrahlen (mg/cm³) | 34 | 51 | 68 |

Es hat sich gezeigt, dass insbesondere mit den Merkmalskombinationen 2, 3, 5, 7, 8 und 9 eine hohe Abtragungsrate für Beschichtungen erzielt werden kann.

Im Anschluss an dieses Sandstrahlen und/oder nach dem gepulsten elektrochemischen Entschichtungsverfahren kann noch ein weiterer elektrochemischer Entschichtungsschritt mit Gleichstrom durchgeführt werden.
Grundsätzlich kann dafür die in der Figur 1 gezeigte Anordnung verwendet werden, wenn der Generator 5 auch dazu ausgelegt ist, einen entsprechenden Gleichstrom an die Hilfselektrode 3 und die Turbinenschaufel 4, 120, 130 abzugeben. Es hat sich dabei gezeigt, dass insbesondere ein Gleichstrom mit ca. 16mA/cm² gute Ergebnisse liefert, da hierdurch noch immer auf der Oberfläche der Turbinenschaufel 4, 120, 130 vorhandene Reste der Beschichtung schonend entfernt werden können, ohne dass die Turbinenschaufel 4, 120, 130 selbst in ihrem Grundwerkstoff angegriffen wird. Als Prozessdauer sind insbesondere 8 Minuten geeignet.

Zuletzt können noch zwei abschließende Verfahrensschritte durchgeführt werden, nämlich ein weiteres Sandstrahlen und der so genannte Heat Tint.

Damit kann das erfindungsgemäße Verfahren vorzugsweise die folgenden Schritte beinhalten:
1. Entfernung der TBC-Schicht
2. Aktivitätsstrahlen, insbesondere Sandstrahlen
3. erstes elektrochemisches Entschichten mit einem gepulsten Strom
4. erstes Sandstrahlen
5. zweites elektrochemisches Entschichten mit Gleichstrom (z.B. ca. 16mA/cm² für ca. 8 Minuten)
6. zweites Sandstrahlen
7. Heat Tint
oder
1. elektrochemisches Entschichten mit einem gepulsten Strom
oder
1. Aktivitätsstrahlen, insbesondere Sandstrahlen
2. elektrochemisches Entschichten mit einem gepulsten Strom
oder
1. erstes elektrochemisches Entschichten mit einem gepulsten Strom
2. zweites elektrochemisches Entschichten mit Gleichstrom (z.B. ca. 16mA/cm² für ca. 8 Minuten)
oder
1. Aktivitätsstrahlen, insbesondere Sandstrahlen
2. erstes elektrochemisches Entschichten mit einem gepulsten Strom
3. zweites elektrochemisches Entschichten mit Gleichstrom (z.B. ca. 16mA/cm² für ca. 8 Minuten)
oder
1. erstes elektrochemisches Entschichten mit einem gepulsten Strom
2. Sandstrahlen
3. zweites elektrochemisches Entschichten mit Gleichstrom (z.B. ca. 16mA/cm² für ca. 8 Minuten)
oder
1. Aktivitätsstrahlen, insbesondere Sandstrahlen
2. erstes elektrochemisches Entschichten mit einem gepulsten Strom
3. Sandstrahlen
4. zweites elektrochemisches Entschichten mit Gleichstrom (z.B. ca. 16mA/cm² für ca. 8 Minuten)
oder
1. erstes elektrochemisches Entschichten mit einem gepulsten Strom
2. erstes Sandstrahlen
3. zweites elektrochemisches Entschichten mit Gleichstrom (z.B. ca. 16mA/cm² für ca. 8 Minuten)
4. zweites Sandstrahlen.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrA1X-Schicht (als Zwischenschicht oder als äußerste Schicht) bildet sich eine schützende Aluminiumoxidschicht (TGO = thermal grown oxide layer).

Auf der MCrA1X kann noch eine Wärmedämmschicht vorhanden sein, die vorzugsweise die äußerste Schicht ist, und besteht beispielsweise aus ZrO Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrA1X-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte durch das vorgenannte Verfahren. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrA1X kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zum elektrochemischen Entfernen einer metallischen Beschichtung von einem Bauteil (4),
bei dem das Bauteil (4) in eine Elektrolytlösung (2) getaucht wird und
durch das Bauteil (4) und eine mit dem Elektrolyt (2) in Kontakt befindliche Hilfselektrode (3) ein Strom geleitet wird,
**dadurch gekennzeichnet, dass**
der Strom mit einer Routine gepulst ist,
die einen Dutycycle von ≥ 10% bis ≤ 90%,
bevorzugt von ≥ 20% bis ≤ 80%,
zwei Stromdichten zwischen 5mA/cm² bis 1000mA/cm², bevorzugt zwischen 10mA/cm² bis 300mA/cm², und
eine Frequenz von 5Hz bis 1000Hz,
bevorzugt 25Hz bis 300Hz aufweist.

2. Verfahren nach Anspruch 1,
**dadurch gekennzeichnet, dass**
der Dutycycle 25% bis 75%,
bevorzugt 50% bis 75% beträgt.

3. Verfahren nach Anspruch 1 oder 2,
**dadurch gekennzeichnet, dass**
die Stromdichten zwischen 50mA/cm² bis 250mA/cm², bevorzugt zwischen 100mA/cm² bis 200mA/cm² und
besonders bevorzugt zwischen 150mA/cm² bis 200mA/cm² liegen.

4. Verfahren nach einem der Ansprüche 1 bis 3,
**dadurch gekennzeichnet, dass**
die Frequenz im Bereich zwischen 50Hz bis 275Hz, bevorzugt zwischen 150Hz bis 275 Hz liegt.

5. Verfahren nach den Ansprüchen 2, 3 oder 4,
**dadurch gekennzeichnet, dass**
der Dutycycle 50%,
die Stromdichten 100mA/cm² und 150mA/cm² und
die Frequenz 150Hz betragen.

6. Verfahren nach den Ansprüchen 2, 3 oder 4,
**dadurch gekennzeichnet, dass**
der Dutycycle 75%,
die Stromdichten 100mA/cm² und 150mA/cm² und
die Frequenz 250Hz betragen.

7. Verfahren nach den Ansprüchen 2, 3 oder 4,
**dadurch gekennzeichnet, dass**
der Dutycycle 75%,
die Stromdichten 150mA/cm² und 200mA/cm² und
. die Frequenz 50Hz betragen.

8. Verfahren nach den Ansprüchen 2, 3 oder 4,
**dadurch gekennzeichnet, dass**
der Dutycycle 50%,
die Stromdichten 150mA/cm² und 200mA/cm² und
die Frequenz 250Hz betragen.

9. Verfahren nach einem der Ansprüche 1 bis 8,
**dadurch gekennzeichnet, dass**
die Elektrolytlösung (2)
eine anorganische Säure oder
eine organische Säure oder
eine organische Base oder
eine anorganische Base oder
Mischungen aus anorganischen und organischen Säuren und/oder Basen enthält oder
daraus besteht.

10. Verfahren nach Anspruch 9,
**dadurch gekennzeichnet, dass**
die Säure HCl ist.

11. Verfahren nach Anspruch 9 oder 10,
**dadurch gekennzeichnet, dass**
weniger als 20 Gew.-%,
besonders weniger als 10 Gew.-% und
insbesondere weniger als 6 Gew.-%,
Säure,
insbesondere HCl,
in der Elektrolytlösung (2) enthalten sind.

12. Verfahren nach einem der Ansprüche 1 bis 11,
**dadurch gekennzeichnet, dass**
die Elektrolytlösung (2) eine Alkanolamin-Verbindung oder ein diese Verbindung enthaltenes Salz als Inhibitor enthält.

13. Verfahren nach Anspruch 12,
**dadurch gekennzeichnet, dass**
der Inhibitor Triethanolamin oder
eines seiner Salze ist oder
in Mischungen mit anderen organischen oder anorganischen Inhibitoren enthalten ist,
insbesondere nur Triethanolamin verwendet wird.

14. Verfahren nach Anspruch 12 oder 13,
**dadurch gekennzeichnet, dass**
als weitere Inhibitoren Carbonsäuren und/oder
Aldehydverbindungen und/oder
ungesättigte Alkohole in der Elektrolytlösung (2) enthalten sind.

15. Verfahren nach einem der Ansprüche 1 bis 14,
**dadurch gekennzeichnet, dass**
mindestens ein mechanischer Reinigungsschritt,
bevorzugt durch Sandstrahlen,
durchgeführt wird.

16. Verfahren nach einem der Ansprüche 1 bis 15,
**dadurch gekennzeichnet, dass**
ein mechanischer Reinigungsschritt,
bevorzugt durch Sandstrahlen,
vor dem ersten elektrochemischen Entschichtungsschritt durchgeführt wird.

17. Verfahren nach Anspruch 15 oder 16,
**dadurch gekennzeichnet, dass**
von der Bauteiloberfläche eine Beschichtungsmasse pro Fläche des Bauteils (4) im Bereich
von 20mg/cm² bis 100mg/cm²,
bevorzugt von 34mg/cm² bis 68mg/cm²,
besonders bevorzugt von 34mg/cm² bis 51mg/cm²,
mechanisch,
insbesondere durch Sandstrahlen,
abgetragen wird.

18. Verfahren nach Anspruch 15, 16 oder 17,
**dadurch gekennzeichnet, dass**
nach dem gepulsten elektrochemischen Entschichtungsschritt eine unlösliche Beschichtungsmasse pro Fläche des Bauteils (4) im Bereich
von 30mg/cm² bis 160mg/cm²,
bevorzugt von 34mg/cm² bis 68mg/cm²,
besonders bevorzugt von 34mg/cm² bis 51mg/cm²,
mechanisch,
insbesondere durch Sandstrahlen,
abgetragen wird.

19. Verfahren nach einem der Ansprüche 1 bis 18,
**dadurch gekennzeichnet, dass**
zusätzlich ein weiterer elektrochemischer Entschichtungsschritt mit Gleichstrom durchgeführt wird,
insbesondere bei 16mA/cm² und
insbesondere für 8 Minuten
zur Sichtbarkeit noch anhaftender Beschichtungsreste.

20. Verfahren nach einem der Ansprüche 1 bis 19,
**dadurch gekennzeichnet, dass**
nach einem zusätzlich weiteren elektrochemischen Entschichtungsschritt,
insbesondere nach dem elektrochemischen Entschichtungsschritt mittels Gleichstrom,
die sichtbare Beschichtungsrestmasse pro Fläche des Bauteils (4) im Bereich 5mg/cm² bis 70mg/cm²,
bevorzugt von 5mg/cm² bis 34mg/cm²,
mechanisch,
insbesondere durch Sandstrahlen,
abgetragen wird.

21. Verfahren nach einem der Ansprüche 1 bis 20,
**dadurch gekennzeichnet, dass**
das Bauteil (4) eine Turbinenschaufel oder eine Triebwerkschaufel ist.

22. Verfahren nach einem der Ansprüche 1 bis 21,
**dadurch gekennzeichnet, dass**
die metallische Beschichtung eine MCrA1X-Schicht ist, wobei M aus der Gruppe Fe, Co und/oder Ni und
X aus der Gruppe Yttrium, Lanthan oder Seltene Erden ausgewählt ist.

23. Verfahren nach einem der Ansprüche 1 bis 22,
**dadurch gekennzeichnet, dass**
der Dutycycle 40% bis 60%,
bevorzugt 50% beträgt.

24. Verfahren nach einem der Ansprüche 1 bis 23,
**dadurch gekennzeichnet, dass**
die Frequenz im Bereich zwischen 25Hz bis 275Hz, bevorzugt bei 250Hz liegt.
